# EUROPÄISCHE PATENTSCHRIFT

(11) **EP 2 594 789 B1**
(45) Veröffentlichungstag und Bekanntmachung des Hinweises auf die Patenterteilung: **30.04.2014**
(21) Anmeldenummer: 11189480.4
(22) Anmeldetag: 17.11.2011
(51) Int. Cl.: F03D 11/00, F03D 11/02, F16H 57/04

(54) **Getriebe für eine Windkraftanlage**
Drive for a wind turbine
Engrenage pour une éolienne

(43) Veröffentlichungstag der Anmeldung: 22.05.2013
(73) Patentinhaber: Siemens Aktiengesellschaft, 80333 München (DE)
(72) Erfinder: Degeling, Markus, 46414 Rhede (DE); Möllers, Manfred, 46399 Bocholt (DE)

(56) Entgegenhaltungen:
- EP-A2- 2 199 607
- EP-A2- 2 280 193

## Beschreibung

Aus DE 102 60 132 A1 ist ein Planetengetriebe für eine Windkraftanlage mit einer in einem Getriebegehäuse umlaufenden Planetenstufe bekannt. Die Planetenstufe umfaßt einen mit einem Rotor verbundenen Planetenträger, der zwei durch Stege mit einander verbundene Seitenwangen aufweist. Außerdem umfaßt die Planetenstufe mehrere über Planetenradlager im Planetenträger gelagerte Planetenräder. Die Planetenräder stehen einerseits mit einem zentralen Sonnenrad und andererseits mit einem fest mit dem Getriebegehäuse verbundenen Hohlrad in Eingriff. Im Getriebegehäuse ist ein von einem Ölführungskanal durchdrungener Einsatzring fest angeordnet. Der Ölführungskanal des Einsatzringes steht an einem ersten Ende mit einem durch eine Wand des Getriebegehäuses geführten Ölzulauf in Verbindung, der mit einer Ölförderpumpe verbunden ist. An einem zweiten Ende steht der Ölführungskanal über eine Ringnut mit mehreren Ölführungskanälen in Verbindung, die durch eine der Seitenwangen des Planetenträgers geführt sind. Die Ölführungskanäle in der Seitenwange des Planetenträgers enden jeweils an einer Berührungsfläche zwischen Achsen der Planetenräder und dem Planetenträger. Durch die Achsen aller Planetanrader sind Ölführungskanäle geführt, die mit den Ölführungskanälen im Planetenträger in Verbindung stehen und in Richtung der Planetenradlager offen sind.

In der gattungsgemäßen EP 2 199 607 A2 ist ein Planetengetriebe für eine Windkraftanlage beschrieben, das auf dem aus DE 102 60 132 A1 bekannten Planetengetriebe basiert sowie eine erste und zweite Planetenstufe umfaßt. Zur Ölversorgung von Planetenradlagern ist ein erster Ölführungskanal vorgesehen, der an einem ersten Ende mit einem durch eine Wand eines Getriebegehäuses geführten Ölzulauf in Verbindung steht, der mit einer Ölförderpumpe verbunden ist. An einem zweiten Ende steht der erste Ölführungskanal über zweite Ölführungskanäle, die durch eine Seitenwange eines Planetenträgers der ersten Planetenstufe geführt sind, mit dritten und vierten Ölführungskanälen in Verbindung, die durch Achsen aller Planetenräder der ersten Planetenstufe geführt und in Richtung der Planetenradlager offen sind. Der erste Ölführungskanal durchdringt eine Einsatzvorrichtung, die fest im Getriebegehäuse angeordnet ist und einen axialen sowie einen radialen Abschnitt aufweist. Die zweiten Ölführungskanäle gehen innerhalb der Seitenwange des Planetenträgers der ersten Planetenstufe von einer ersten Ringnut aus. Die erste Ringnut ist in eine radiale Stirnfläche der Seitenwange und in den axialen Abschnitt der Einsatzvorrichtung eingeschnitten. Die zweiten Ölführungskanäle enden jeweils an einer Berührungsfläche zwischen Achsen der Planetenräder und dem Planetenträger der ersten Planetenstufe in einer dritten Ringnut. Die dritte Ringnut steht mit den dritten, vierten Ölführungskanälen innerhalb der Achsen aller Planetenräder der ersten Planetenstufe in Verbindung.

Die Einsatzvorrichtung des in EP 2 199 607 A2 beschriebenen Planetengetriebes umfaßt darüber hinaus einen radialen Stator mit einer axialen Buchse, die radial zwischen dem Planetenträger der ersten Planetenstufe und einem Planetenträger der zweiten Planetenstufe angeordnet ist. In die axiale Buchse und in eine radiale Stirnfläche des Planetenträgers der zweiten Planetenstufe ist eine zweite Ringnut eingeschnitten. Der Planetenträger der zweiten Planetenstufe ist von fünften Ölführungskanälen durchdrungen, die jeweils in einer vierten Ringnut enden. Die vierte Ringnut ist in eine radiale Stirnfläche von Achsen der Planetenräder der zweiten Planetenstufe eingeschnitten sowie mit sechsten und siebten Ölführungskanälen verbunden. Die sechsten und siebten Ölführungskanäle sind durch die Achsen der Planetenräder der zweiten Planetenstufe geführt und in Richtung der Planetenradlager offen.

Aus EP 2 280 193 A2 ist ein Planetengetriebe mit einem Hohlrad, mehreren in einem Planetenradträger gelagerten Planetenrädern und einem Sonnenrad sowie einer Antriebswelle und einer Abtriebswelle bekannt. Zusätzlich ist eine an das Sonnenrad angebundene und in einem Getriebegehäuse angeordnete Zahnkupplung vorgesehen, deren Verzahnung von einer zumindest axial verschiebbaren Kupplungshülse umgeben ist. In der Kupplungshülse ist ein Schmierstoffzuführungskanal angeordnet, der an einem der Verzahnung der Zahnkupplung zugewandten Abschnitt der Kupplungshülse endet. Mit der Kupplungshülse ist ein an den Schmierstoffzuführungskanal angeschlossener Rohrkompensator verbunden. Der Rohrkompensator verbindet den Schmierstoffzuführungskanal und einen Schmierstoffversorgungskanal, der in einer mit der Zahnkupplung drehbar beweglichen Welle vorgesehen ist.

Der vorliegenden Erfindung liegt die Aufgabe zugrunde, ein zumindest zweistufiges Getriebe mit einer zuverlässigen Schmierstoffversorgung einer beide Getriebestufen miteinander verbindenden Zahnkupplung zu schaffen.

Diese Aufgabe wird erfindungsgemäß durch ein Getriebe mit den in Anspruch 1 angegebenen Merkmalen gelöst. Vorteilhafte Weiterbildungen der vorliegenden Erfindung sind in den abhängigen Ansprüchen angegeben.

Das erfindungsgemäße Getriebe weist zumindest eine erste Planetenstufe, die ein Hohlrad, mehrere in einem Planetenträger gelagerte Planetenräder und ein Sonnenrad umfaßt, und eine zweite Getriebestufe auf. Des weiteren ist ein die erste Planetenstufe und zweite Getriebestufe umgebendes Getriebegehäuse vorgesehen. Mit einem Planetenträger einer antriebsseitigen Planetenstufe ist eine Antriebswelle drehfest verbunden, die mit einer Rotornabe verbindbar ist, während mit einem Zahnrad einer abtriebsseitigen Getriebestufe eine Abtriebswelle drehfest verbunden ist, die mit einem Generator verbindbar ist. Dabei kann die erste Planetenstufe beispielsweise die antriebsseitige Planetenstufe sein, während die zweite Getriebestufe die abtriebsseitige Getriebestufe sein kann. An einem ersten Ende einer Sonnenwelle der ersten Planetenstufe ist das Sonnenrad der ersten Planetenstufe angeordnet. An ihrem zweiten Ende ist die Sonnenwelle der ersten Planetenstufe von einer Hohlwelle der zweiten Getriebestufe konzentrisch umgeben. Die Sonnenwelle der ersten Planetenstufe ist mit der Hohlwelle drehfest mittels einer Zahnkupplung verbunden, deren Verzahnung innerhalb der Hohlwelle angeordnet ist. Die Verzahnung kann beispielsweise als Kurzverzahnung ausgestaltet sein. An einer dem Sonnenrad der ersten Planetenstufe zugewandten Stirnseite der Hohlwelle ist ein Schmierstoffzuführungsring angeordnet. Der Schmierstoffzuführungsring weist eine konische Durchtrittsöffnung auf, deren Innendurchmesser in Richtung des Sonnenrads der ersten Planetenstufe abnimmt, und umgibt die Sonnenwelle der ersten Planetenstufe konzentrisch. Darüber hinaus ist zumindest eine auf einen umlaufenden Spalt zwischen dem Schmierstoffzuführungsring und der Sonnenwelle der ersten Planetenstufe ausgerichtete Schmierstoffzuführungsdüse zur Schmierstoffversorgung der Zahnkupplung vorgesehen. Aufgrund des in Richtung des Sonnenrads der ersten Planetenstufe abnehmenden Innendurchmessers der konischen Durchtrittsöffnung ergibt sich eine verbesserte Schmierstoffversorgung der Zahnkupplung.

Weist der Schmierstoffzuführungsring an seiner konischen Durchtrittsöffnung eine Aufweitung in Richtung der Zahnkupplung auf, kann dadurch eine zuverlässige und wirksame Weiterleitung von in den Spalt zwischen dem Schmierstoffzuführungsring und der Sonnenwelle der ersten Planetenstufe eingespritztem Schmierstoff in Richtung der Zahnkupplung sichergestellt werden. Probleme aufgrund eines zu geringen Schmierstoffflusses zur und durch die Zahnkupplung können damit vermieden werden, insbesondere im Gegensatz zu einem Schmierstoffzuführungsring, der eine konische Durchtrittsöffnung mit einer Verjüngung in Richtung der Zahnkupplung aufweist.

Entsprechend einer bevorzugten Ausgestaltung der vorliegenden Erfindung weisen die erste Planetenstufe und zweite Getriebestufe eine gegenüber einer Aufstellfläche zu einem abtriebsseitigen Ende nach unten geneigte Wellenlage auf. Damit ergibt sich eine nochmals verbesserte Weiterleitung von in den Spalt zwischen dem Schmierstoffzuführungsring und der Sonnenwelle der ersten Planetenstufe eingespritztem Schmierstoff.

Die Zahnkupplung ist vorzugsweise durch eine Außenverzahnung an der Sonnenwelle der ersten Planetenstufe und durch eine Innenverzahnung an der Hohlwelle gebildet. Auf diese Weise ergibt sich eine besonders kompakte Bauform.

Entsprechend einer besonders bevorzugten Weiterbildung der vorliegenden Erfindung ist im Getriebegehäuse ein Einsatzring konzentrisch zur Sonnenwelle der ersten Planetenstufe angeordnet, der von einem Schmierstoffverteilungskanal durchdrungen ist. Der Schmierstoffverteilungskanal ist einerseits mit einer Schmierstoffpumpe und andererseits mit Schmierstoffzuführungskanälen im Planetenträger der ersten Planetenstufe verbunden. Damit kann die Schmierstoffzuführungsdüse vorteilhafterweise am Einsatzring montiert sein und eine Verbindung zum Schmierstoffverteilungskanal aufweisen. Dies ermöglicht eine einfach zu realisierende und äußerst zuverlässige Schmierstoffzuführung zur Zahnkupplung.

Die vorliegende Erfindung wird nachfolgend an einem Ausführungsbeispiel anhand der Zeichnung näher erläutert. Es zeigt
- Figur 1: eine Querschnittsdarstellung eines dreistufigen Getriebes für eine Windkraftanlage,
- Figur 2: eine Querschnittsdarstellung einer Zahnkupplung zwischen einer Sonnenwelle einer Planetenstufe und einer Hohlwelle einer abtriebsseitigen Stirnradstufe des in Figur 1 dargestellten Getriebes.

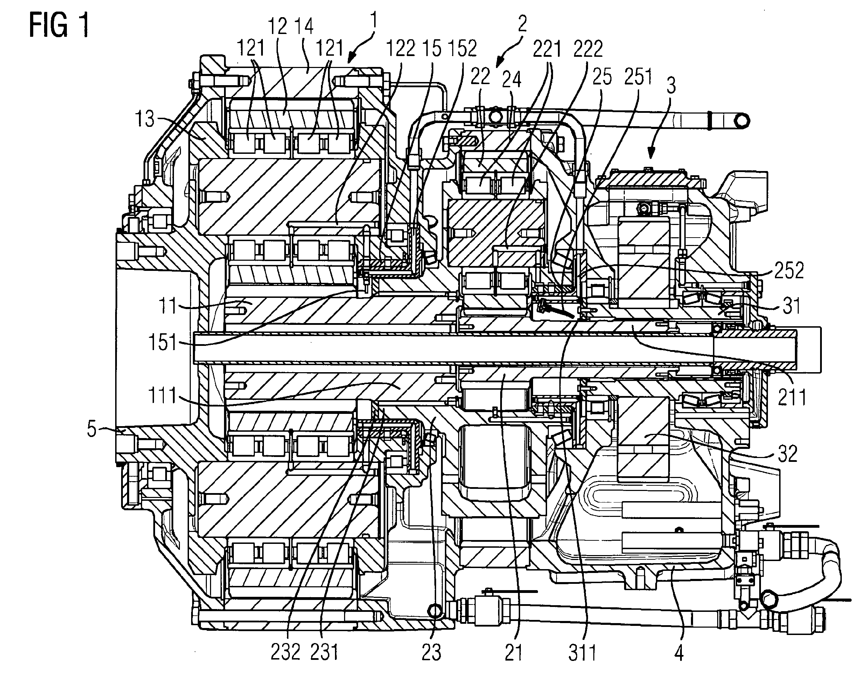

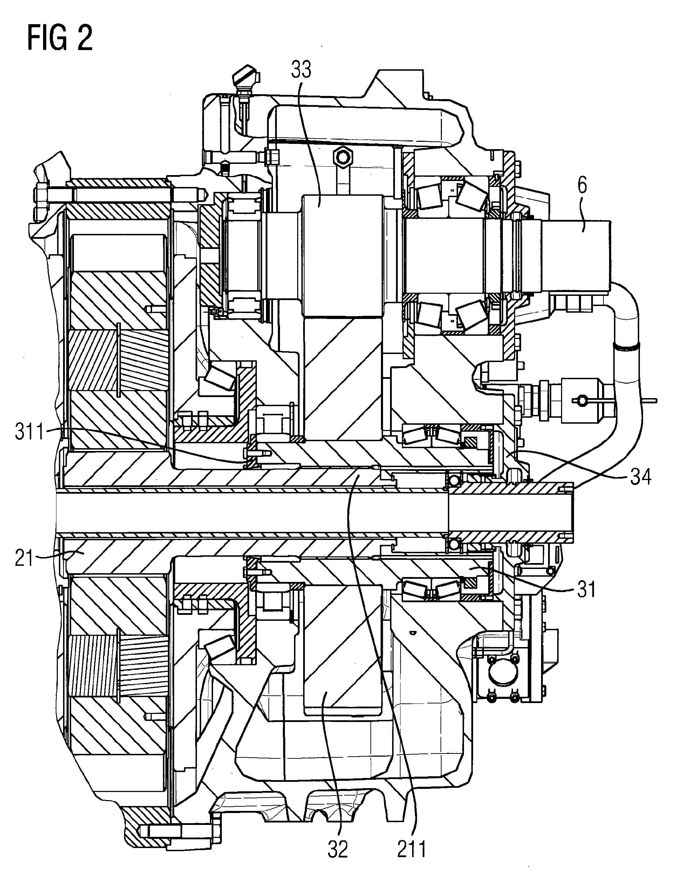

Das in Figur 1 beispielhaft dargestellte Getriebe umfaßt eine antriebsseitige Planetenstufe 1, eine nachfolgende mittlere Planetenstufe 2 sowie eine abtriebsseitige Stirnradstufe 3, die in einem Getriebegehäuse 4 angeordnet sind. Im Getriebegehäuse sind eine mit einer Rotornabe verbindbare Antriebswelle 5 und eine mit einem Generator verbindbare Abtriebswelle 6 gelagert. Die Antriebswelle 5 ist mit einem Planetenträger 13 der antriebsseitige Planetenstufe 1 verbunden, während die Abtriebswelle 6 mit einem Stirnritzel 33 der abtriebsseitigen Stirnradstufe 3 verbunden ist (siehe Figur 2).

Die beiden Planetenstufe 1, 2 umfassen jeweils ein Hohlrad 14, 24, mehrere in einem Planetenträger 13, 23 gelagerte Planetenräder 12, 22 und ein Sonnenrad 11, 21. Die Antriebswelle 5 ist dabei einstückig an den Planetenträger 13 der antriebsseitigen Planetenstufe 1 angeformt. Eine mit dem Sonnenrad 11 der antriebsseitigen Planetenstufe 1 drehfest verbundene Sonnenwelle 111 ist über eine Kurzverzahnungskupplung mit dem Planetenträger 23 der mittleren Planetenstufe 2 verbunden. An den Planetenträger 23 der mittleren Planetenstufe 2 ist eine Hohlwelle 231 einstückig angeformt, die einen Endabschnitt der Sonnenwelle 111 der antriebsseitigen Planetenstufe 1 konzentrisch umgibt. Die Kurzverzahnungskupplung zwischen den beiden Planetenstufen 1, 2 ist dabei durch eine Außenverzahnung an der Sonnenwelle 111 der antriebsseitige Planetenstufe 1 und durch eine Innenverzahnung an der Hohlwelle 231 am Planetenträger 23 der mittleren Planetenstufe 2 gebildet.

Die Stirnradstufe 3 umfaßt neben dem Stirnritzel 33 ein mit diesem kämmendes Stirnrad 32 und eine Hohlwelle 31, das vom Stirnrad 32 konzentrisch umgeben und mit diesem drehfest verbunden ist. Eine mit dem Sonnenrad 21 der mittleren Planetenstufe 2 drehfest verbundene Sonnenwelle 211 ist über eine Kurzverzahnungskupplung mit der Hohlwelle 31 der Stirnradstufe 3 verbunden, die einen Endabschnitt der Sonnenwelle 211 konzentrisch umgibt. Die Kurzverzahnungskupplung zwischen der mittleren Planetenstufe 2 und der Stirnradstufe 3 ist dabei durch eine Außenverzahnung an der Sonnenwelle 211 der mittleren Planetenstufe 2 und durch eine Innenverzahnung an der Hohlwelle 31 der Stirnradstufe 3 gebildet.

An einer dem Sonnenrad 11 der antriebsseitigen Planetenstufe 1 zugewandten Stirnseite der Hohlwelle 231 am Planetenträger 23 der mittleren Planetenstufe 2 ist ein Schmierstoffzuführungsring 232 angeordnet, der die Sonnenwelle 111 konzentrisch umgibt. Dieser Schmierstoffzuführungsring 232 weist eine konische Durchtrittsöffnung auf, deren Innendurchmesser in Richtung des Sonnenrads 11 der antriebsseitigen Planetenstufe 1 abnimmt. Auf einen umlaufenden Spalt zwischen dem Schmierstoffzuführungsring 232 und der Sonnenwelle 111 ist zumindest eine Schmierstoffzuführungsdüse 151 zur Schmierstoffversorgung der Kurzverzahnungskupplung zwischen den beiden Planetenstufen 1, 2 ausgerichtet. Der Schmierstoffzuführungsring 232 weist an seiner konischen Durchtrittsöffnung eine Aufweitung in Richtung der Kurzverzahnungskupplung auf. Durch diese Aufweitung erfolgt eine Weiterleitung von in den Spalt zwischen dem Schmierstoffzuführungsring 232 und der Sonnenwelle 111 der antriebsseitigen Planetenstufe 1 eingespritztem Schmierstoff in Richtung der Kurzverzahnungskupplung.

Im Getriebegehäuse 4 ist ferner ein feststehender Einsatzring 15 konzentrisch zur Sonnenwelle 111 der antriebsseitigen Planetenstufe 1 angeordnet. Dieser Einsatzring 15 ist von einem Schmierstoffverteilungskanal 152 durchdrungen. Der Schmierstoffverteilungskanal 152 ist einerseits mit einer Schmierstoffpumpe und andererseits mit Schmierstoffzuführungskanälen 122 im Planetenträger 13 der antriebsseitigen Planetenstufe 1 verbunden. Die Schmierstoffzuführungskanäle 122 im Planetenträger 13 enden an Schmierstoffzuführungspunkten für Lager 121 der Planetenräder 12 der antriebsseitigen Planetenstufe 1. Am Einsatzring 15 ist auch die Schmierstoffzuführungsdüse 151 für die Kurzverzahnungskupplung zwischen den beiden Planetenstufen 1, 2 montiert. Dabei weist die Schmierstoffzuführungsdüse 151 eine Verbindung zum Schmierstoffverteilungskanal 152 im Einsatzring 15 auf.

Figur 2 ist im Detail zu entnehmen, daß analog zur Kurzverzahnungskupplung zwischen den beiden Planetenstufen 1, 2 auch an einer dem Sonnenrad 21 der mittleren Planetenstufe 2 zugewandten Stirnseite der Hohlwelle 31 der Stirnradstufe 3 ein Schmierstoffzuführungsring 311 angeordnet ist. Dieser Schmierstoffzuführungsring 311 umgibt die Sonnenwelle 211 der mittleren Planetenstufe 2 konzentrisch und weist eine konische Durchtrittsöffnung auf, deren Innendurchmesser in Richtung des Sonnenrads 21 abnimmt. Auf einen umlaufenden Spalt zwischen dem Schmierstoffzuführungsring 311 und der Sonnenwelle 211 ist zumindest eine Schmierstoffzuführungsdüse 251 zur Schmierstoffversorgung der Kurzverzahnungskupplung zwischen den mittleren Planetenstufe 2 und der Stirnradstufe 3 ausgerichtet. Der Schmierstoffzuführungsring 311 weist an seiner konischen Durchtrittsöffnung eine Aufweitung in Richtung der Kurzverzahnungskupplung auf. Durch diese Aufweitung erfolgt analog zu obigen Ausführungen eine Weiterleitung von in den Spalt zwischen dem Schmierstoffzuführungsring 311 und der Sonnenwelle 211 der mittleren Planetenstufe 2 eingespritztem Schmierstoff in Richtung der Kurzverzahnungskupplung.

Auch für die mittlere Planetenstufe 2 ist ein feststehender Einsatzring 25 vorgesehen, der konzentrisch zur Sonnenwelle 211 im Getriebegehäuse 4 angeordnet ist. Der Einsatzring 25 der mittleren Planetenstufe 2 ist von einem Schmierstoffverteilungskahal 252 durchdrungen, der einerseits mit der Schmierstoffpumpe und andererseits mit Schmierstoffzuführungskanälen 222 im Planetenträger 23 der mittleren Planetenstufe 2 verbunden ist. Die Schmierstoffzuführungskanäle 222 im Planetenträger 23 enden an Schmierstoffzuführungspunkten für Lager 221 der Planetenräder 22 der mittleren Planetenstufe 2. Am Einsatzring 25 ist ferner die Schmierstoffzuführungsdüse 251 für die Kurzverzahnungskupplung zwischen der mittleren Planetenstufe 2 und der Stirnradstufe 3 montiert. Die Schmierstoffzuführungsdüse 251 ist dabei an den Schmierstoffverteilungskanal 252 im Einsatzring 25 angebunden. Eine weiter verbesserte Schmierstoffversorgung der Kurzverzahnungskupplungen ergibt sich darüber hinaus, wenn die beiden Planetenstufen 1, 2 und die Stirnradstufe 3 eine gegenüber einer Aufstellfläche zu einem abtriebsseitigen Ende nach unten geneigte Wellenlage aufweisen.

Nach Durchlaufen der Kurzverzahnungskupplung zwischen der mittleren Planetenstufe 2 und der Stirnradstufe 3 wird zugeführter Schmierstoff durch mehrere axiale Bohrungen in der Hohlwelle 31 der Stirnradstufe 3 in einen abtriebsseitigen Lagerdeckel 34 geleitet.

Die Anwendung der vorliegenden Erfindung ist nicht auf das beschriebene Ausführungsbeispiel beschränkt.

## Patentansprüche

1. Getriebe für eine Windkraftanlage mit
- zumindest einer ersten Planetenstufe, die ein Hohlrad (14) mehrere in einem Planetenträger (13) gelagerte Planetenräder (12) und ein Sonnenrad (11) umfaßt, und einer zweiten Getriebestufe,
- einem die erste Planetenstufe und die zweite Getriebestufe umgebenden Getriebegehäuse,
- einer mit einem Planetenträger einer antriebsseitigen Planetenstufe drehfest verbundenen Antriebswelle (5), die mit einer Rotornabe verbindbar ist, und einer mit einem Zahnrad einer abtriebsseitigen Getriebestufe drehfest verbundenen Abtriebswelle (6), die mit einem Generator verbindbar ist,
- einer Sonnenwelle (111) der ersten Planetenstufe, an deren erstem Ende das Sonnenrad (11) der ersten Planetenstufe angeordnet ist, und deren zweites Ende von einer Hohlwelle (231) der zweiten Getriebestufe umgeben ist,
- einer die Sonnenwelle (111) der ersten Planetenstufe mit der Hohlwelle drehfest verbindenden Zahnkupplung, deren Verzahnung innerhalb der Hohlwelle (231) angeordnet ist, **gekennzeichnet durch**
- einem an einer dem Sonnenrad (11) der ersten Planetenstufe zugewandten Stirnseite der Hohlwelle (231) angeordneten Schmierstoffzuführungsring (232), der eine konische Durchtrittsöffnung aufweist, deren Innendurchmesser in Richtung des Sonnenrads (11) der ersten Planetenstufe abnimmt, und die Sonnenwelle (111) der ersten Planetenstufe konzentrisch umgibt,
- zumindest einer auf einen umlaufenden Spalt zwischen dem Schmierstoffzuführungsring (232) und der Sonnenwelle (111) der ersten Planetenstufe ausgerichteten Schmierstoffzuführungsdüse (151) zur Schmierstoffversorgung der Zahnkupplung.

2. Getriebe nach Anspruch 1,
bei dem der Schmierstoffzuführungsring (232) an seiner konischen Durchtrittsöffnung eine Aufweitung in Richtung der Zahnkupplung aufweist, durch die eine Weiterleitung von in den Spalt zwischen dem Schmierstoffzuführungsring (232) und der Sonnenwelle (11) der ersten Planetenstufe eingespritztem Schmierstoff in Richtung der Zahnkupplung erfolgt.

3. Getriebe nach einem der Ansprüche 1 oder 2,
bei dem die erste Planetenstufe (1) und zweite Getriebestufe eine gegenüber einer Aufstellfläche zu einem abtriebsseitigen Ende nach unten geneigte Wellenlage aufweisen.

4. Getriebe nach einem der Ansprüche 1 bis 3,
bei dem die Zahnkupplung durch eine Außenverzahnung an der Sonnenwelle (111) der ersten Planetenstufe und durch eine Innenverzahnung an der Hohlwelle (231) gebildet ist.

5. Getriebe nach einem der Ansprüche 1 bis 4,
bei dem im Getriebegehäuse ein Einsatzring (15) konzentrisch zur Sonnenwelle (111) der ersten Planetenstufe angeordnet ist, der von einem Schmierstoffverteilungskanal (252) durchdrungen ist, der einerseits mit einer Schmierstoffpumpe und andererseits mit Schmierstoffzuführungskanälen im Planetenträger (13) der ersten Planetenstufe verbunden ist.

6. Getriebe nach Anspruch 5,
bei dem die Schmierstoffzuführungsdüse (151) am Einsatzring montiert ist und eine Verbindung zum Schmierstoffverteilungskanal aufweist.

7. Getriebe nach einem der Ansprüche 1 bis 6,
bei dem die erste Planetenstufe die antriebsseitige Planetenstufe ist.

8. Getriebe nach einem der Ansprüche 1 bis 7,
bei dem die zweite Getriebestufe die abtriebsseitige Getriebestufe ist.

9. Getriebe nach einem der Ansprüche 1 bis 8,
bei dem die zweite Getriebestufe eine Stirnradstufe ist, und bei dem die Hohlwelle (231) konzentrisch von einem Stirnrad (32) der zweiten Getriebestufe umgeben ist, und bei dem die Hohlwelle drehfest mit dem Stirnrad der zweiten Getriebestufe verbunden ist.

10. Getriebe nach einem der Ansprüche 1 bis 8,
bei dem die zweite Getriebestufe eine Planetenstufe ist, und bei dem die Hohlwelle (231) mit einem Planetenträger (23) der zweiten Getriebestufe drehfest verbunden ist.

11. Getriebe nach Anspruch 10,
bei dem die Hohlwelle (231) an den Planetenträger (23) der zweiten Planetenstufe einstückig angeformt ist.

## Claims

1. Gear train for a wind turbine comprising
- at least one first planetary gear stage which comprises an annulus gear (14), a plurality of planetary gears (12) mounted in a planetary carrier (13), and a sun gear (11), as well as a second gear train stage,
- a gear train housing enclosing the first planetary gear stage and the second gear train stage,
- a drive shaft (5) which can be connected to a rotor hub and which is co-rotationally coupled to a planetary carrier of a planetary gear stage on the drive side, and a driven shaft (6) which can be connected to a generator and which is co-rotationally coupled to a toothed gearwheel of a gear train stage on the driven side,
- a sun shaft (111) of the first planetary gear stage, at the first end of which the sun gear (11) of the first planetary gear stage is arranged, and the second end of which is surrounded by a hollow shaft (231) of the second gear train stage,
- a denture clutch, the tooth system of which is arranged inside the hollow shaft (231), co-rotationally coupling the sun shaft (111) of the first planetary gear stage to the hollow shaft, **characterised by** a lubricant feed ring (232) which is arranged at a front face of the hollow shaft (231) facing toward the sun gear (11) of the first planetary gear stage, which has a cone-shaped passage opening, the internal diameter of which decreases in the direction of the sun gear (11) of the first planetary gear stage, and which concentrically surrounds the sun shaft (111) of the first planetary gear stage, and
- at least one lubricant feed nozzle (151) aligned with a circumferential gap between the lubricant feed ring (232) and the sun shaft (111) of the first planetary gear stage for the purpose of supplying lubricant to the denture clutch.

2. Gear train according to claim 1,
wherein the lubricant feed ring (232) has, at its cone-shaped passage opening, a section which widens in the direction of the denture clutch and through which lubricant injected into the gap between the lubricant feed ring (232) and the sun shaft (11) of the first planetary gear stage is conveyed in the direction of the denture clutch.

3. Gear train according to one of claims 1 or 2,
wherein the first planetary gear stage (1) and second gear train stage have a shaft orientation inclined downward toward a driven-side end with respect to an installation surface.

4. Gear train according to one of claims 1 to 3,
wherein the denture clutch is formed by means of an external tooth system on the sun shaft (111) of the first planetary gear stage and by means of an internal tooth system on the hollow shaft (231).

5. Gear train according to one of claims 1 to 4,
wherein an insert ring (15) is arranged concentrically with the sun shaft (111) of the first planetary gear stage in the gear train housing and through said insert ring there passes a lubricant distribution channel (252) which is connected on one side to a lubricant pump and on the other side to lubricant feed channels in the planetary carrier (13) of the first planetary gear stage.

6. Gear train according to claim 5,
wherein the lubricant feed nozzle (151) is mounted on the insert ring and has a connection to the lubricant distribution channel.

7. Gear train according to one of claims 1 to 6,
wherein the first planetary gear stage is the planetary gear stage on the drive side.

8. Gear train according to one of claims 1 to 7,
wherein the second gear train stage is the gear train stage on the driven side.

9. Gear train according to one of claims 1 to 8,
wherein the second gear train stage is a spur gear stage, and wherein the hollow shaft (231) is concentrically surrounded by a spur gear (32) of the second gear train stage, and wherein the hollow shaft is co-rotationally coupled to the spur gear of the second gear train stage.

10. Gear train according to one of claims 1 to 8,
wherein the second gear train stage is a planetary gear stage, and wherein the hollow shaft (231) is co-rotationally coupled to a planetary carrier (23) of the second gear train stage.

11. Gear train according to claim 10,
wherein the hollow shaft (231) is integrally formed in a single piece with the planetary carrier (23) of the second planetary gear stage.

## Revendications

1. Engrenage pour une éolienne comprenant
- au moins un premier étage planétaire, qui comprend une roue ( 14 ) à denture intérieure, plusieurs roues ( 12 ) satellites montées dans une cage ( 13 ) de transmission planétaire et une roue ( 11 ) solaire, et un deuxième étage d'engrenage,
- un carter d'engrenage entourant le premier étage planétaire et le deuxième étage d'engrenage,
- un arbre ( 15 ) menant, qui est solidaire en rotation d'une cage de transmission planétaire d'un étage planétaire du côté menant et qui peut être relié à un moyeu rotorique, et un arbre ( 16 ) mené, qui est solidaire en rotation d'une roue dentée d'un étage d'engrenage du côté mené et qui peut être relié à une génératrice,
- un arbre ( 111 ) solaire du premier étage planétaire, à un premier bout duquel est montée la roue ( 11 ) solaire du premier étage planétaire et dont le deuxième bout est entouré d'un arbre ( 231 ) creux du deuxième étage d'engrenage,
- un accouplement par dent, qui relie, d'une manière solidaire en rotation, l'arbre ( 111 ) solaire du premier étage planétaire à l'arbre creux et dont la denture est disposée à l'intérieur de l'arbre ( 231 ) creux, **caractérisé par**
- un anneau ( 232 ) d'apport de lubrifiant, qui est monté sur un côté frontal de l'arbre ( 231 ) creux tourné vers la roue ( 11 ) solaire du premier étage planétaire et qui a une ouverture de passage conique, dont le diamètre intérieur diminue dans la direction de la roue ( 11 ) solaire du premier étage planétaire et qui entoure concentriquement l'arbre ( 111 ) solaire du premier étage planétaire,
- au moins, pour l'alimentation en lubrifiant de l'accouplement par dent, une buse ( 151 ) d'apport de lubrifiant dirigée sur une fente faisant le tour entre l'anneau ( 232 ) d'apport de lubrifiant et l'arbre ( 111 ) solaire du premier étage planétaire.

2. Engrenage suivant la revendication 1,
dans lequel l'anneau ( 232 ) d'apport de lubrifiant a, sur son ouverture de passage conique, un élargissement dans la direction de l'accouplement par dent, élargissement par lequel s'effectue un acheminement, dans la direction de l'accouplement par dent, du lubrifiant projeté dans la fente entre l'anneau ( 232 ) d'apport de lubrifiant et l'arbre ( 11 ) solaire du premier étage planétaire.

3. Engrenage suivant l'une des revendications 1 ou 2,
dans lequel le premier étage ( 1 ) planétaire et le deuxième étage d'engrenage ont une position d'arbre inclinée vers le bas à une extrémité du côté mené par rapport à une surface de mise en place.

4. Engrenage suivant l'une des revendications 1 à 3,
dans lequel l'accouplement par dent est formé d'une denture extérieure sur l'arbre ( 111 ) solaire du premier étage planétaire et d'une denture intérieure sur l'arbre ( 231 ) creux.

5. Engrenage suivant l'une des revendications 1 à 4,
dans lequel, dans le carter de l'engrenage, un anneau ( 15 ) d'insertion est disposé concentriquement à l'arbre ( 111 ) solaire du premier étage planétaire et est traversé par un canal ( 252 ) de répartition de lubrifiant, qui communique d'un côté avec une pompe à lubrifiant et d'un autre côté avec des canaux d'apport de lubrifiant dans la cage ( 13 ) de transmission planétaire du premier étage planétaire.

6. Engrenage suivant la revendication 5,
dans lequel la buse ( 151 ) d'apport de lubrifiant est montée sur l'anneau d'insertion et a une communication vers le canal de répartition de lubrifiant.

7. Engrenage suivant l'une des revendications 1 à 6,
dans lequel le premier étage planétaire est l'étage planétaire du côté menant.

8. Engrenage suivant l'une des revendications 1 à 7,
dans lequel le deuxième étage d'engrenage est l'étage d'engrenage du côté mené.

9. Engrenage suivant l'une des revendications 1 à 8,
dans lequel le deuxième étage d'engrenage est un étage à roue droite et dans lequel l'arbre ( 231 ) creux est entouré concentriquement d'une roue ( 32 ) droite du deuxième étage d'engrenage et dans lequel l'arbre creux est solidaire en rotation de la roue droite du deuxième étage d'engrenage.

10. Engrenage suivant l'une des revendications 1 à 8,
dans lequel le deuxième étage d'engrenage est un étage planétaire et dans lequel l'arbre ( 231 ) creux est solidaire en rotation d'une cage ( 23 ) de transmission planétaire du deuxième étage d'engrenage.

11. Engrenage suivant la revendication 10,
dans lequel l'arbre ( 231 ) creux est formé d'une pièce avec la cage ( 23 ) de transmission planétaire du deuxième étage planétaire.
